# EUROPEAN PATENT SPECIFICATION

(11) **EP 2 274 871 B1**
(45) Date of publication and mention of the grant of the patent: **25.09.2019**
(21) Application number: 08736135.8
(22) Date of filing: 11.04.2008
(51) Int. Cl.: H04L 12/14, H04M 15/00

(54) **SYSTEM, METHOD, AND NETWORK ELEMENTS FOR PROVIDING SERVICE INFORMATION SUCH AS ADVICE OF CHARGE INFORMATION IN A COMMUNICATION NETWORK**
SYSTEM, VERFAHREN UND NETZELEMENTE ZUR BEREITSTELLUNG VON DIENSTE-BEZOGENER INFORMATION, BEISPIELSWEISE ADVICE-OF-CHARGE INFORMATION, IN EINEM KOMMUNIKATIONSNETZ
SYSTÈME, PROCÉDÉ ET ÉLÉMENTS DE RÉSEAU PERMETTANT D'OBTENIR DES INFORMATIONS DE SERVICE TELLES QUE L'AVIS D'INFORMATION DE FRAIS DANS UN RÉSEAU DE COMMUNICATION

(43) Date of publication of application: 19.01.2011
(73) Proprietor: Nokia Solutions and Networks Oy, 02610 Espoo (FI)
(72) Inventor: GÖRMER, Gerald, 16352 Basdorf (DE); HICKETHIER, Thomas, 13086 Berlin (DE); KOSKINEN, Juha-Pekka, FIN-13210 Hämeenlinna (FI); NÄRHI, Anne, FIN-33400 Tampere (FI); VALLINEN, Juha, FIN-37130 Nokia (FI)
(74) Representative: Ruuskanen, Juha-Pekka
(86) International application number: PCT/EP2008/054424
(87) International publication number: WO 2009/124594

(56) References cited:
- WO-A-2007/139877
- WO-A1-2008/017262
- CAI Y ET AL: "IP MULTIMEDIA SUBSYSTEM ONLINE SESSION CHARGING CALL CONTROL" BELL LABS TECHNICAL JOURNAL, WILEY, CA, US, vol. 4, no. 10, 1 January 2006 (2006-01-01), pages 117-132, XP001239291 ISSN: 1089-7089

## Description

### FIELD OF THE INVENTION

The present invention relates to a system, method, and network elements for providing information related to a service such as a Supplementary Service, preferably an Advice of Charge, AoC, Supplementary Service. The service may preferably be provided with or for another service such as a communication service which may e.g. be a voice communication service, a data communication service, a multimedia communication service, etc. The supplementary service and the communication service are provided in a communication network with a suitable protocol, preferably Session Initiation Protocol, SIP, and preferable in a SIP network such as the IP Multimedia Subsystem (IMS). Further, the information needed to accomplish this supplementary service could also be provided in a diameter credit control application, DCCA.

The present AoC specification is based on a solution where the AoC Function, which could be located in a dedicated AOC application server, AoC AS, or could be included in other IMS entity, takes care of building AoC information, which is delivered to user equipment. In order to provide that information, the AoC Function needs to get relevant AoC information from an online charging system, OCS, or other similar entity where such information is stored. When an IMS-gateway, IMS-GW triggers to an OCS using diameter credit control application, DCCA (Ro-interface), the IMS-GW must obtain an indication about AoC in order to request AoC related information from the OCS. This information is also needed by other network entities involved in the session, e.g. application servers offering services. That is, the AoC related information should be transferred to S-CSCF and further to AoC Function. If this is not done, AoC Function must do the additional Rating Request to OCS itself leading to additional signalling and load for the OCS.

International patent application publication number WO 2007/139877 A1 relates to IMS gateway systems and method for providing a notification to an IMS subscriber.

European patent application publication number EP 2,048,815 A1 relates to a method and system for implementing an AoC supplementary service so as to conveniently provide the user with more enriched AoC information.

### SUMMARY OF THE INVENTION

The present invention is defined by the appended independent claims. Certain more specific aspects are defined by the dependent claims.

According to an aspect, there is provided a system, comprising:
a network element configured to detect a type of a supplementary service requested by a user equipment,
the network element being further configured to send a message containing the detected type of the requested supplementary service to a charging system,
the network element being further configured to receive a message including information related to the detected type of the requested supplementary service from the charging system.

According to further refinements as defined under the above aspect,
- the system further comprises a gateway, the message from the network element containing the detected type of the requested supplementary service is sent to the gateway, and the gateway is configured to forward the detected type of the requested supplementary service contained in the message from the network element to the charging system;
- the gateway is further configured to receive a message including information related to the detected type of the requested supplementary service from the charging system and to forward the information related to the detected type

of the requested supplementary service contained in the message to the network element, the network element is further configured to receive the information related to the detected type of the requested supplementary service forwarded by the gateway;
- the network element is further configured to forward the information related to the requested supplementary service to the user equipment;
- information indicating the type of the supplementary service is included in a header of a session initiation protocol message;
- the information indicating the type of the supplementary service is included in an attribute value pair.

According to a further aspect of the present invention, there is provided a network element, comprising:
a detector configured to detect a type of a supplementary service requested by an user equipment in a communication network,
a sender configured to send a message containing the detected type of the requested supplementary service to a charging system, and
a receiver configured to receive a message including information related to the requested supplementary service from the charging system.

According to further refinements of the invention as defined under the above aspect,
- the sender is further configured to send the message containing the detected type of the requested supplementary service to a gateway, the gateway forwarding the detected type of the requested supplementary service contained in the message from the network element to the charging system;
- the receiver is further configured to receive the information related to the detected type of the requested supplementary service forwarded by a gateway, which is configured to receive a message including information related to the detected type of the requested supplementary service from the charging system and to forward the information related to the detected type of the requested supplementary service contained in the message to the network element;
- the sender is further configured to forward the information related to the requested supplementary service to the user equipment;
- the information indicating the type of the supplementary service is included in a header of a session initiation protocol message;
- the information indicating the type of the supplementary service is included in an attribute value pair.

According to a still further aspect of the present invention, there is provided a method, comprising:
detecting, at a network element, a type of a supplementary service requested by a user equipment,
sending, by the network element, a message containing the detected type of the requested supplementary service to a charging system,
receiving, at the network element, a message including information related to the detected type of the requested supplementary service from the charging system.

According to further refinements of the invention as defined under the above aspect,
- the method further comprises sending, by the network element, the message containing the detected type of the requested supplementary service to the gateway, and forwarding, by the gateway, the detected type of the requested supplementary service contained in the message from the network element to the charging system.
- the method further comprises receiving, at the gateway, a message including information related to the detected type of the requested supplementary service from the charging system, and forwarding, by the gateway, the information related to the detected type of the requested supplementary service contained in the message to the network element, and receiving, at the network element the information related to the detected type of the requested supplementary service forwarded by the gateway;
- the method further comprises forwarding, by the network element, the information related to the requested supplementary service to the user equipment;
- the information indicating the type of the supplementary service is included in a header of a session initiation protocol message;
- the information indicating the type of the supplementary service is included in an attribute value pair.

According to a further aspect of the present invention, there is provided a computer program product including a program for a processing device, comprising software code portions for performing the steps of the method as described above when the program is run on the processing device.

The invention proposes providing information related to a service or supplementary service such as the Advice of Charge, AoC, service that is compliant with current requirements and standards.

When the serving call session control function, S-CSCF, detects that a subscriber could have an active AoC service, it will route SIP messages via an AoC Function. AoC Function will fetch precise AoC service type from HSS using Sh-interface. In online cases, the triggering from IMS-GW to OCS will be done using the Ro-interface.

In case of SIP, in order to be able to request needed AoC related information from the OCS, the IMS-GW must get this information from the S-CSCF via SIP. This information could be added to a private session initiation protocol header, P-Header, in a P-Charging-Vector header.

In case of DCCA, when session related charging is in question, there is currently no method available in DCCA to get AoC related information asked from OCS in a credit control request CCR(INITIAL_REQUEST) or to have it returned from OCS in a credit control answer CCA(INITIAL_REQUEST). According to known methods, the AoC related PRICE_ENQUIRY is done using only CCR(EVENT_REQUEST) and the got information is only the cost, not tariffs.

According to embodiments of the present invention, this problem is solved by additional AoC related attribute value pairs AVPs.

The invention is preferably implemented in or for a mobile communication network, but could also be used in a fixed or cable communication network.

Generally, a communication service can be provided by SIP requests such as INVITE, SUBSCRIBE, MESSAGE, PUBLISH, etc., or by any other appropriate service providing or setting up a communication or session, such as a call, with another network element. A supplementary service can, e.g., be an Advice of Charge.

Generally, the invention relates to DCCA and the SIP area, IP Multimedia Subsystem, IMS, NGN, Next Generation Networks, and the provision of information related to Supplementary Services with SIP and DCCA. Particularly, it applies to the provision of information related to the Advice of Charge Supplementary Service with SIP and DCCA. For the purpose of the present invention to be described herein below, it should be noted that
- a user equipment may for example be any kind of communication device, such as wireless or wired devices, e.g. personal computers, mobile phones or the like, irrespective of a specific standard to which these conform;
- method steps likely to be implemented as (low level) software code portions and being run using a processor at one of the server/terminal entities, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices likely to be implemented as hardware components at one of the network elements or gateways are hardware independent and can be implemented using any known or future developed hardware technology or any hybrids of these, such as MOS (Metal Oxide Semiconductor), CMOS (Complementary MOS), BiCMOS (Bipolar CMOS), ECL (Emitter Coupled Logic), TTL (Transistor Transistor Logic), etc., using for example ASIC (Application Specific Integrated Circuit) components or DSP (Digital Signal Processor) components, as an example;
- devices/units can be implemented as individual devices/units, but this does not exclude that they are implemented in a distributed fashion throughout the system, as long as the functionality of the device/system is preserved;
- respective units, e.g. sender, receiver, detector, etc. according to present embodiments can be implemented by any known means, either in hardware (DSP, microprocessor, microcontroller, ASIC, FPGA, etc) and/or software, respectively, as long as it is adapted to perform the described functions of the respective parts.

### BRIEF DESCRIPTION OF THE DRAWINGS

Embodiments of the present invention are described herein below with reference to the accompanying drawings, wherein:
Fig. 1 is an overview of a structure to which embodiments of the present invention are applicable.
Fig. 2 is a signalling diagram according to an example of embodiments of the present invention.
Fig. 3 is a signalling diagram according to another example of embodiments of the present invention.
Fig. 4 is signalling diagram according to a further example of embodiments of the present invention.
Fig. 5 is block diagram of a network element according to embodiments of the present invention.

### DETAILED DESCRIPTION OF PREFERRED EMBODIMENTS

Embodiments of the present invention will be described herein below with reference to the accompanying drawings.

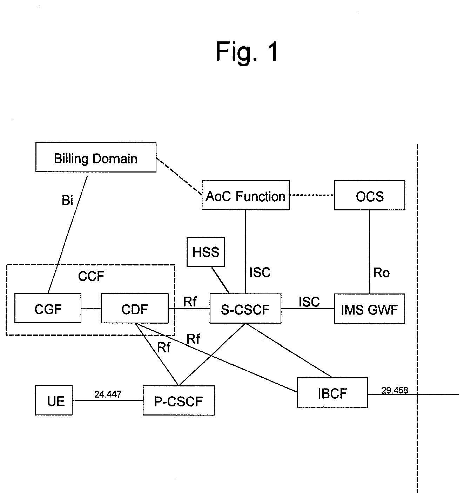

Fig. 1 is an overview of another structure to which embodiments of the present invention are applicable. Fig. 1 shows the specific parts of an IMS charging architecture that handles AoC according to embodiments of the invention. Fig.1 shows also functional entities that are not directly involved in AoC, for the sake of completeness.

The IMS charging architecture as shown in Fig. 1 comprises a Billing Domain, a charging collection function CCF involved with offline charging including a charging gateway function CGF and a charging data function CDF, a used equipment UE, a Proxy call session control function P-CSCF, a serving call session control function S-CSCF, and a home subscriber server HSS. The HSS stores filter criteria, in particular initial filter criteria set for the users or UEs assigned to the respective HSS. The filter criteria determine the services that will be provided to each user. The architecture further comprises an IMS-gateway function IMS-GWF, an online charging system OCS, an AoC function, and an interconnect border control function IBCF.

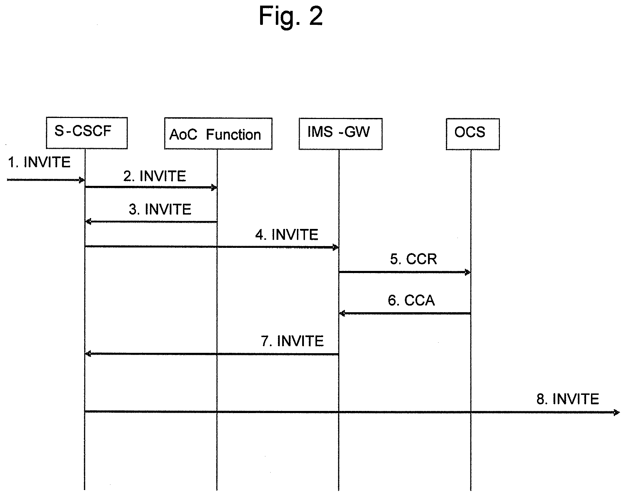

Fig. 2 is a signalling diagram according to an example of embodiments of the present invention.

In the following, embodiments of the present invention are described, in which the communication network employs SIP.

Here, it is assumed that signalling optimization is used, that is, AoC Function does not make the rating request separately. Also the additional method where AoC Function will send in session setup phase SIP message *183 Sessions progress* to UE via S-CSCF and receive *PRACK* from UE via S-CSCF is left out for sake of simplicity.

First, in a step 1, a SIP INVITE message is sent from user equipment UE or a P-CSCF (not shown in Fig. 2) to S-CSCF for requesting AoC. The S-CSCF receives the INVITE request of step 1 and executes a filter criterion that controls forwarding those requests containing the AoC indication to the AoC Function. The S-CSCF accesses, or downloads, the e.g. initial filter criteria from a home subscriber server HSS (not shown in Fig. 2) for the user of the UE. Upon receipt of the INVITE request of step 1, the S-CSCF evaluates the criteria, e.g. the initial filter criteria set for the user of UE 1, and as a result of that, forwards, in a step 2, the INVITE request to the AoC Function. Hence, the S-CSCF detects that the subscriber has an AoC service activated.

The SIP messages are routed via AoC Function. AoC Function will fetch the precise AoC-type from HSS using Sh-interface. In this phase there is added a P-Header in SIP with a P-Charging-Vector having a new value indicating one or a combination of AoC-types. The values can be, e.g.:
- 1 for indicating AoCI-S;
- 2 for indicating AoCC-S;
- 3 for indicating AoCI-D;
- 4 for indicating AoCC-D;
- 5 for indicating AoCI-E;
- 6 for indicating AoCC-E;
where:
- AoCI-S means Charging information at communication set-up time to give Advice of Charge Information;
- AoCC-S means Charging information at communication set-up time to use Advice of Charge information for Charging;
- AoCI-D means Charging information during communication to give Advice of Charge Information;
- AoCC-D means Charging information during communication to use Advice of Charge information for Charging;
- AoCI-E means Charging information at the end of the communication to give Advice of Charge Information;
- AoCC-E means Charging information at the end of the communication to use Advice of Charge information for Charging.

When AoCC-S/D/E are in question, it can be assumed that UE is using prepaid SIM card, or any corresponding device, where credit is stored and deducted at set-up, during or at the end of the session according to parameters UE has received from the network.

When AoCI-S/D/E are in question, charging information is presented in UE at set-up, during or at the end of the session without any action required by phone.

Then, in a step 2, a SIP INVITE message is forwarded from the S-CSCF to the AoC Function. Further, in a step 3, a SIP INVITE message is sent from the AoC Function to the S-CSCF and, in a step 4, a SIP INVITE message is sent from the S-CSCF to the IMS-GW.

In a step 5, a credit control request CCR is sent from the IMS-GW to the OCS. Since, the IMS-GW has got the AoC indication (AoC type) from SIP, the IMS-GW can deliver that information to the OCS.

Then, in a step 6, a credit control answer CCA is sent from the OCS to the IMS-GW. The OCS returns the granted service units and AoC related charging information according to the received AoC type.

Then, in a step 7, a SIP INVITE message is sent from the IMS-GW to the S-CSCF and in step 8, a SIP INVITE message is sent from the S-CSCF to a terminating party (not shown in Fig. 2) with the AoC type being included in a P-Header in SIP.

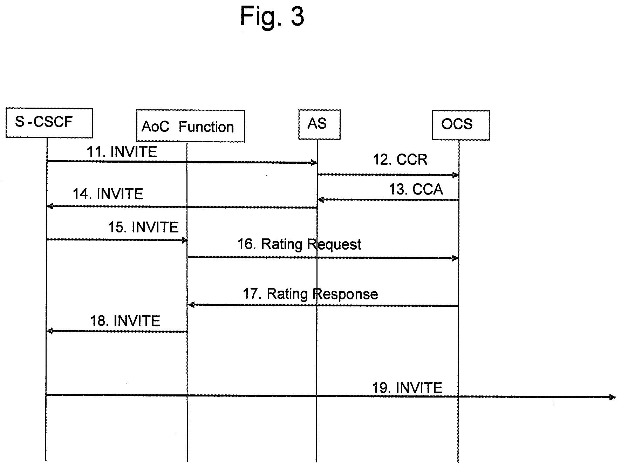

Fig. 3 is a signalling diagram according to another example of embodiments of the present invention.

If the AoC Function will take care of all rating requests, signalling involving an additional application server serving a subscriber according to embodiments of the invention could be as follows.

In a step 11, a SIP INVITE message is sent from the S-CSCF to the AS. The S-CSCF detects that the subscriber has a service which is offered by the AS. In the SIP message there is added a P-Header in SIP with a P-Charging-Vector having a new value or a combination indicating an AoC-types, as described above with respect to Fig. 2. The values can be e.g.:
- 1 for indicating AoCI-S;
- 2 for indicating AoCC-S;
- 3 for indicating AoCI-D;
- 4 for indicating AoCC-D;
- 5 for indicating AoCI-E;
- 6 for indicating AoCC-E.

According to this information, the AS knows that it must return additional data in step 14 so that the AoC Function is able to retrieve service specific charging info from OCS, because otherwise, the AoC Function will know nothing about the service offered by the OCS.

In a step 12, a CCR, which includes an AoC indication, is sent from the AS to the OCS. The OCS will then rate the request and reserve money. In a step 13, a CCA, which may include special AS AoC related data, is sent from the OCS to the AS and the OCS returns the granted service units.

In a step 14, a SIP INVITE message, in which data needed to retrieve AoC related information concerning the AS is included, as mentioned above, is sent from the AS to the S-CSCF. Further, in a step 15, a SIP INVITE message, in which AoC related data concerning the AS is included, is sent from the S-CSCF to the AoC Function.

In a step 16, a rating request is sent from the AoC Function to the OCS. In the request, the AoC Function requests AS related AoC information from the OCS. The request may include special AS AoC related data received in the SIP INVITE. In a step 17, a rating response is sent from the OCS to the AoC Function, in which the OCS returns the AoC related information. The AoC Function then stores the AoC related information (to be inserted into a 183 response or 2000K response) .

Then, in a step 18, a SIP INVITE message is sent from the AoC Function to the S-CSCF and, in a step 19, a SIP INVITE message is sent from the S-CSCF to a terminating party (not shown in Fig. 3).

In the following, embodiments of the present invention are described, in which the communication network employs DCCA.

Here, reference is made to the signalling diagram shown in Fig. 2.

In a similar manner as described above, it is assumed here that signalling optimization is used, that is, AoC AS does not make the rating request separately.

First, in a step 1, a SIP INVITE message is sent from user equipment UE or a P-CSCF (not shown in Fig. 2) to S-CSCF for requesting AoC. The S-CSCF detects that the subscriber has an AoC service activated, as described above. The SIP messages are routed via AoC Function.

Then, in a step 2, a SIP INVITE message is forwarded from the S-CSCF to the AoC Function. Further, in a step 3, a SIP INVITE message is sent from the AoC Function to the S-CSCF and, in a step 4, a SIP INVITE message is sent from the S-CSCF to the IMS-GW.

In a step 5, a credit control request CCR is sent from the IMS-GW to the OCS. According to an example of the present invention, in this CCR, there is included an attribute value pair (AVP) AoC-type, or several of them if combination of AoC types is used. The construction of the AVP presented here is exemplification which does not exclude other possible AVP structuration. The AVP could have (at least) the following values:
- 0 for indicating that no AoC is used;
- 1 for indicating AoCI-S;
- 2 for indicating AoCC-S;
- 3 for indicating AoCI-D;
- 4 for indicating AoCC-D;
- 5 for indicating AoCI-E;
- 6 for indicating AoCC-E.

Hence, the CCR from the IMS-GW to the OCS includes an AoC-indicator and the OCS will rate the request, reserve money (if needed) and fetch AoC related information.

In a step 6, a credit control answer CCA is sent from the OCS to the IMS-GW. In this CCA, the OCS returns granted service units and the AoC related information.

According to an example of the present invention, in the CCA there is provided the following AVP which provides the AoC related information:

```
 AoC-Information (grouped) ::= < AVP Header: xx >
         {Tariff-Information }
         {Add-On-Charging-Information}
```

The format of Tariff-Information and Add-On-Charging-Information AVPs are constructed so that all information related to AoC could be conveyed there, e.g. currency, pulses (if used), actual tariff, tariff switch times, other AS specific AoC information and so on.

In a step 7, a SIP INVITE message is sent from the IMS-GW to the S-CSCF. In this message, the AoC related charging information which will be used in the AoC Function to produce the actual AoC information is returned to the S-CSCF, and stored there, if it is not stored already in IMS-GW.

Then, a SIP INVITE message is sent from the S-CSCF to the terminating party (not shown in Fig. 2).

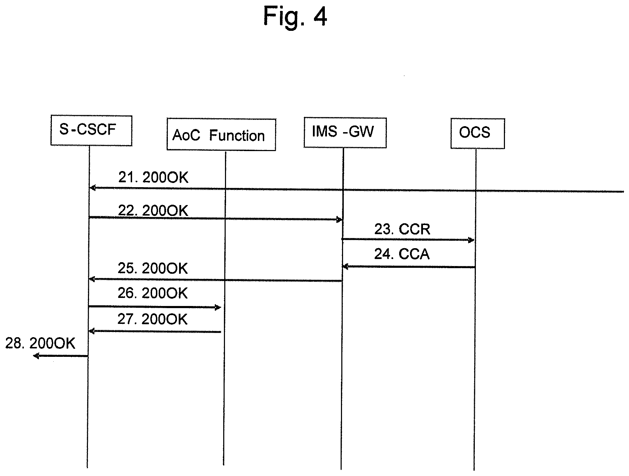

Fig. 4 is a signalling diagram according to a further example of embodiments of the present invention.

Now, reference is made to Fig. 4 which shows an example of a signal flow using 2000K acknowledgement messages.

In a step 21, a SIP 2000K message is sent from the terminating party (not shown in Fig. 4) to the S-CSCF. Then, in step 22, a SIP 2000K message is sent from the S-CSCF to the IMS-GW and, if in IMS-GW the 2000K trigger is activated, in step 23 additional CCR is made to OCS to update credit control session. In step 24 CCA is returned with updated information to IMS-GW. If the AoC related information was stored in the IMS-GW, it will be updated. In that case updated information is inserted in a SIP 2000K message which is sent from the IMS-GW to the S-CSCF in a step 25.

Further, in a step 26, a SIP 2000K message is sent from the S-CSCF to the AoC Function. In this message, the AoC related information, which will be used in the AoC Function to produce actual AoC information will be delivered to the AoC Function. With this AoC related charging information, the AoC Function produces the actual AoC information which will be delivered to UE.

Then, in a step 27, a SIP 2000K message is sent from the AoC Function to the S-CSCF with the AoC information being included in SIP.

After that, in a step 28, a SIP 2000K message is sent from the S-CSCF to the originating party (not shown in Fig. 4) and the AoC information is sent to the user.

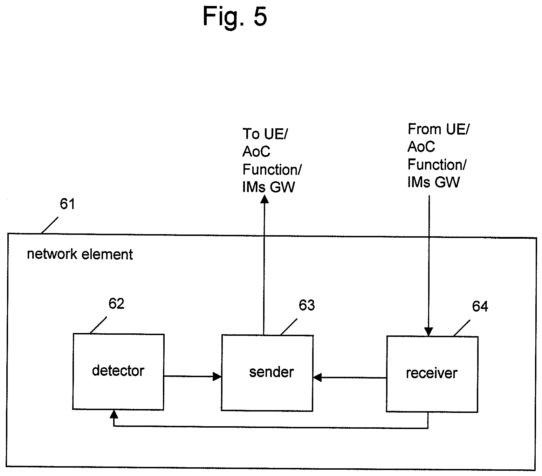

Fig. 5 is block diagram of a network element according to an embodiment of the present invention.

Such a network element 61 is, e.g. the S-CSCF. According to Fig. 6, the network element 61 comprises a detector 62, for detecting that the subscriber has an AoC service activated. Further, the network element 61 comprises a sender 63 for, e.g. sending an SIP INVITE message to the AoC Function, or sending a SIP INVITE message to a terminating party. Additionally, the network element 61 comprises a receiver 64 for, e.g. receiving a SIP INVITE message from the UE or P-CSCF, or receiving a SIP INVITE message from the IMS-GW.

In the foregoing description of the network element, only the units that are relevant for understanding the principles of the invention have been described using functional blocks. Of course it is obvious that the network element may comprise further units that are necessary for their operation. However, a description of these units is omitted in this specification. The arrangement of the functional blocks of the network devices is not construed to limit the invention, and the functions may be performed by one block or further split into sub-blocks.

According to embodiments of the present invention, there is described how the AoC information is transferred from the OCS to the S-CSCF. For this purpose, according to embodiments of the present invention, a SIP header handling the AoC information is defined which is transferred to the IMS-GWF.

Further, according to embodiments of the present invention, there is described an optimization of the already existing Ro interface (between IMS-GWF and OCS) to reduce the signalling traffic and the load on the OCS. For this purpose, according to embodiments of the present invention, a new AVP is added to the Ro definition. Additionally these AVPs would be needed in every other alternative solution where other interface is used to fetch needed AoC related charging information from OCS.

All processing steps that have been described in the foregoing can also be implemented using computer-readable signals that may be stored on a computer-readable medium and carry instructions to be executed by one of the entities/devices involved.

In view of the foregoing description it will be evident to a person skilled in the art that various modifications may be made within the scope of the invention.

The invention provides a method, comprising detecting, at a network element, a type of a supplementary service requested by a user equipment, sending, by the network element, a message containing the detected type of the requested supplementary service to a charging system, receiving, at the network element, a message including information related to the detected type of the requested supplementary service from the charging system. The present invention further provides a respective system and network elements.

## Claims

1. A system, comprising:
a first network element (AoC Function, IMS-GW) configured to detect a type of an advice of charge service requested by a user equipment, the first network element being further configured to send a credit control request message indicating the detected type of the requested advice of charge service to a charging system (OCS), and
a second network element (S-CSCF, 61) configured to send a session initiation protocol invite message containing, in a header of the session initiation protocol invite message, the type of the requested advice of charge service to the first network element, wherein the first network element is configured to:
detect the type of an advice of charge service requested by the user equipment from the session initiation protocol invite message received from the second network element,
receive a credit control answer message including information related to the detected type of the requested advice of charge service from the charging system; and
forward the information related to the detected type of the requested advice of charge service received from the charging system to the second network element,
and wherein the second network element is further configured to receive the information related to the detected type of the requested advice of charge service forwarded by the first network element.

2. The system according to claim 1, wherein the credit control request message comprises an attribute value pair indicating the detected type of the requested advice of charge service.

3. The system according to claim 1 or claim 2,
the second network element being further configured to forward the information related to the detected type of the requested advice of charge service to the user equipment.

4. The system according to any one of claims 1 to 3, wherein the first network element comprises one of an internet multimedia subsystem application server, an advice of charge function, or an internet multimedia subsystem gateway.

5. The system according to any one of claims 2 to 4, wherein the second network element comprises a call session control function.

6. A network element (AoC Function, IMS-GW), comprising:
a detector configured to detect a type of a advice of charge service requested by an user equipment in a communication network,
a sender configured to send a credit control request message indicating the detected type of the requested advice of charge service to a charging system (OCS), and
a receiver configured to:
receive a credit control message including information related to the requested advice of charge service from the charging system; and
receive a session initiation protocol invite message containing, in a header of the session initiation protocol invite message, the detected type of the requested advice of charge service from a second network element (S-CSCF, 61), and
the detector being further configured to detect the type of an advice of charge service requested by the user equipment from the session initiation protocol invite message received from the second network element; and
the sender being further configured to forward the information related to the detected type of the requested advice of charge service received from the charging system to the second network element.

7. The network element according to claim 6, wherein the request message comprises an attribute value pair indicating the detected type of the requested advice of charge service.

8. The network element according to claim 6 or claim 7, wherein the network element comprises one of an internet multimedia system application server, an advice of charge function, or an internet multimedia subsystem gateway.

9. The network element according to claim 7 or claim 8, wherein the second network element comprises a call session control function.

10. A method, comprising:
detecting, at a first network element (AoC Function, IMS-GW), a type of a advice of charge service requested by a user equipment,
sending, by the first network element, a credit control request message indicating the detected type of the requested advice of charge service to a charging system (OCS),
receiving, at the first network element, a credit control message including information related to the detected type of the requested advice of charge service from the charging system,
receiving, by the first network element, a session initiation protocol invite message containing, in a header of the session initiation protocol invite message, the detected type of the requested advice of charge service from a second network element (S-CSCF, 61),
detecting, at the first network element, the type of an advice of charge service requested by the user equipment from the session initiation protocol invite message received from the second network element;
forwarding, by the first network element, the information related to the detected type of the requested advice of charge service received from the charging system to the second network element.

11. The method according to claim 10, wherein the request message comprises an attribute value pair indicating the detected type of the requested advice of charge service.

12. The method according to claim 10 or claim 11, further comprising receiving, by the second network element, the information related to the detected advice of charge service from the first network element.

13. The method according to any one of claims 10 to 12,
further comprising forwarding, by the second network element, the information related to the requested advice of charge service to the user equipment.

14. The method according to any one of claims 10 to 13,
wherein the first network element comprises one of an internet multimedia system application server, an advice of charge function, or an internet multimedia subsystem gateway.

15. The method according to any one of claims 11 to 14, wherein the second network element comprises a call session control function.

16. A computer program product including a program for a processing device, comprising software code portions for performing the steps of a method according to any one of claims 10 to 15 when the program is run on the processing device.

## Patentansprüche

1. System, umfassend:
erstes Netzelement (AoC-Funktion, IMS-GW), das dafür ausgelegt ist, eine Art eines von einer Benutzervorrichtung angeforderten Advice-of-Charge-Dienstes zu erkennen, wobei das erste Netzelement ferner dafür ausgelegt ist, eine Kreditprüfungsanforderungsnachricht, die die erkannte Art des angeforderten Advice-of-Charge-Dienstes kennzeichnet, an ein Abrechnungssystem (OCS) zu senden, und
zweites Netzelement (S-CSCF, 61), das dafür ausgelegt ist, eine Invite-Nachricht des Session Initiation Protocols, die in einem Kopfbereich der Invite-Nachricht des Session Initiation Protocols die Art des angeforderten Advice-of-Charge-Dienstes enthält, an das erste Netzelement zu senden, wobei das erste Netzelement für Folgendes ausgelegt ist:
Erkennen der Art eines von der Benutzervorrichtung angeforderten Advice-of-Charge-Dienstes, aus der Invite-Nachricht des Session Initiation Protocols, die vom zweiten Netzelement empfangen wird,
Empfangen einer Kreditprüfungsantwortnachricht, die Informationen über die erkannte Art des angeforderten Advice-of-Charge-Dienstes beinhaltet; und
Weiterleiten der Informationen über die erkannte Art des angeforderten Advice-of-Charge-Dienstes, die vom Abrechnungssystem empfangen werden, an das zweite Netzelement,
und wobei das zweite Netzelement ferner dafür ausgelegt ist, die Informationen über die erkannte Art des angeforderten Advice-of-Charge-Dienstes zu empfangen, die vom ersten Netzelement weitergeleitet werden.

2. System nach Anspruch 1, wobei die Kreditprüfungsanforderungsnachricht ein Attributwertpaar umfasst, das die erkannte Art des angeforderten Advice-of-Charge-Dienstes kennzeichnet.

3. System nach Anspruch 1 oder Anspruch 2,
wobei das zweite Netzelement ferner dafür ausgelegt ist, die Informationen über die erkannte Art des angeforderten Advice-of-Charge-Dienstes an die Benutzervorrichtung weiterzuleiten.

4. System nach einem der Ansprüche 1 bis 3, wobei das erste Netzelement eines von einem Internet-Multimedia-Subsystem-Anwendungsserver, einer Advice-of-Charge-Funktion oder einem Internet-Multimedia-Subsystem-Gateway umfasst.

5. System nach einem der Ansprüche 2 bis 4, wobei das zweite Netzelement eine Call Session Control Function umfasst.

6. Netzelement (AoC-Funktion, IMS-GW), umfassend:
Erkennungseinheit, die dafür ausgelegt ist, eine Art eines Advice-of-Charge-Dienstes zu erkennen, der von einer Benutzervorrichtung in einem Kommunikationsnetzwerk angefordert wird, Sender, der dafür ausgelegt ist, eine Kreditprüfungsanforderungsnachricht, die die erkannte Art des angeforderten Advice-of-Charge-Dienstes kennzeichnet, an ein Abrechnungssystem (OCS) zu senden, und
Empfänger, der für Folgendes ausgelegt ist:
Empfangen einer Kreditprüfungsnachricht, die Informationen über den angeforderten Advice-of-Charge-Dienst enthält, vom Abrechnungssystem; und
Empfangen einer Invite-Nachricht des Session Initiation Protocols, die in einem Kopf der Invite-Nachricht des Session Initiation Protocols die erkannte Art des angeforderten Advice-of-Charge-Dienstes enthält, von einem zweiten Netzelement (S-CSCF, 61), und
wobei die Erkennungseinheit ferner dafür ausgelegt ist, die Art eines von der Benutzervorrichtung angeforderten Advice-of-Charge-Dienstes zu erkennen, aus der Invite-Nachricht des Session Initiation Protocols, die vom zweiten Netzelement empfangen wird; und
wobei der Sender ferner dafür ausgelegt ist, die Informationen über die erkannte Art des angeforderten Advice-of-Charge-Dienstes, die vom Abrechnungssystem empfangen werden, an das zweite Netzelement weiterzuleiten.

7. Netzelement nach Anspruch 6, wobei die Anforderungsnachricht ein Attributwertpaar umfasst, das die erkannte Art des angeforderten Advice-of-Charge-Dienstes kennzeichnet.

8. Netzelement nach Anspruch 6 oder Anspruch 7, wobei das Netzelement eines von einem Internet-Multimedia-System-Anwendungsserver, einer Advice-of-Charge-Funktion oder einem Internet-Multimedia-Subsystem-Gateway umfasst.

9. Netzelement nach Anspruch 7 oder Anspruch 8, wobei das zweite Netzelement eine Call Session Control Function umfasst.

10. Verfahren, umfassend:
Erkennen, an einem ersten Netzelement (AoC-Funktion, IMS-GW), einer Art eines von einer Benutzervorrichtung angeforderten Advice-of-Charge-Dienstes,
Senden, durch das erste Netzelement, einer Kreditprüfungsanforderungsnachricht, die die erkannte Art des angeforderten Advice-of-Charge-Dienstes kennzeichnet, an ein Abrechnungssystem (OCS),
Empfangen, am ersten Netzelement, einer Kreditprüfungsnachricht, die Informationen über die erkannte Art des angeforderten Advice-of-Charge-Dienstes enthält, vom Abrechnungssystem,
Empfangen, durch das erste Netzelement, einer Invite-Nachricht des Session Initiation Protocols, die in einem Kopf der Invite-Nachricht des Session Initiation Protocols die erkannte Art des angeforderten Advice-of-Charge-Dienstes enthält, von einem zweiten Netzelement (S-CSCF, 61),
Erkennen, am ersten Netzelement, der Art eines von der Benutzervorrichtung angeforderten Advice-of-Charge-Dienstes, aus der Invite-Nachricht des Session Initiation Protocols, die vom zweiten Netzelement empfangen wird;
Weiterleiten, durch das erste Netzelement, der vom Abrechnungssystem empfangenen Informationen über die erkannte Art des angeforderten Advice-of-Charge-Dienstes, an das zweite Netzelement.

11. Verfahren nach Anspruch 10, wobei die Anforderungsnachricht ein Attributwertpaar umfasst, das die erkannte Art des angeforderten Advice-of-Charge-Dienstes kennzeichnet.

12. Verfahren nach Anspruch 10 oder Anspruch 11, ferner umfassend das Empfangen, durch das zweite Netzelement, der Informationen über den erkannten Advice-of-Charge-Dienst vom ersten Netzelement.

13. Verfahren nach einem der Ansprüche 10 bis 12,
ferner umfassend das Weiterleiten, durch das zweite Netzelement, der Informationen über den angeforderten Advice-of-Charge-Dienst an die Benutzervorrichtung.

14. Verfahren nach einem der Ansprüche 10 bis 13,
wobei das erste Netzelement eines von einem Internet-Multimedia-System-Anwendungsserver, einer Advice-of-Charge-Funktion oder einem Internet-Multimedia-Subsystem-Gateway umfasst.

15. Verfahren nach einem der Ansprüche 11 bis 14, wobei das zweite Netzelement eine Call Session Control Function umfasst.

16. Computerprogrammprodukt, das ein Programm für eine Verarbeitungsvorrichtung beinhaltet, umfassend Softwarecodeabschnitte zum Ausführen der Schritte eines Verfahrens nach einem der Ansprüche 10 bis 15, wenn das Programm auf der Verarbeitungsvorrichtung ausgeführt wird.

## Revendications

1. Système, comprenant :
un premier élément de réseau (fonction AoC, IMS-GW), configuré pour détecter un type d'un avis de service payant demandé par un équipement d'utilisateur, le premier élément de réseau étant en outre configuré pour envoyer à un système de facturation (OCS) un message de demande de contrôle de crédit indiquant le type détecté de l'avis demandé de service payant ; et
un second élément de réseau (S-CSCF, 61), configuré pour envoyer au premier élément de réseau un message d'invitation sur protocole d'ouverture de session, contenant, dans un en-tête du message d'invitation sur protocole d'ouverture de session, le type de l'avis demandé de service payant, le premier élément de réseau étant configuré pour :
détecter le type d'un avis de service payant demandé par l'équipement d'utilisateur, à partir du message d'invitation sur protocole d'ouverture de session reçu en provenance du second élément de réseau ;
recevoir, en provenance du système de facturation, un message de réponse de contrôle de crédit incluant une information relative au type détecté de l'avis demandé de service payant ; et
transférer au second élément de réseau l'information relative au type détecté de l'avis demandé de service payant, reçue en provenance du système de facturation,
et le second élément de réseau étant en outre configuré pour recevoir l'information relative au type détecté de l'avis demandé de service payant, transférée par le premier élément de réseau.

2. Système selon la revendication 1, dans lequel le message de demande de contrôle de crédit comprend une paire de valeurs d'attribut indiquant le type détecté de l'avis demandé de service payant.

3. Système selon la revendication 1 ou 2, dans lequel le second élément de réseau est en outre configuré pour transférer à l'équipement d'utilisateur l'information relative au type détecté de l'avis demandé de service payant.

4. Système selon l'une quelconque des revendications 1 à 3, dans lequel le premier élément de réseau comprend un serveur d'applications de sous-système multimédia Internet ou un avis de fonction payante ou une passerelle de sous-système multimédia Internet.

5. Système selon l'une quelconque des revendications 2 à 4, dans lequel le second élément de réseau comprend une fonction de contrôle de session d'appel.

6. Élément de réseau (fonction AoC, IMS-GW), comprenant :
un module de détection, configuré pour détecter un type d'un avis de service payant demandé par un équipement d'utilisateur dans un réseau de communication ;
un module d'envoi, configuré pour envoyer à un système de facturation (OCS) un message de demande de contrôle de crédit indiquant le type détecté de l'avis demandé de service payant ; et
un module de réception, configuré pour :
recevoir, en provenance du système de facturation, un message de contrôle de crédit incluant une information relative à l'avis demandé de service payant ; et
recevoir, en provenance d'un second élément de réseau (S-CSCF, 61), un message d'invitation sur protocole d'ouverture de session contenant, dans un en-tête du message d'invitation sur protocole d'ouverture de session, le type détecté de l'avis demandé de service payant ; et
le module de détection étant en outre configuré pour détecter le type d'un avis de service payant demandé par l'équipement d'utilisateur, à partir du message d'invitation sur protocole d'ouverture de session reçu en provenance du second élément de réseau ; et
le module d'envoi étant en outre configuré pour transférer au second élément de réseau l'information relative au type détecté de l'avis demandé de service payant, reçue en provenance du système de facturation.

7. Élément de réseau selon la revendication 6, dans lequel le message de demande comprend une paire de valeurs d'attribut indiquant le type détecté de l'avis demandé de service payant.

8. Élément de réseau selon la revendication 6 ou 7, dans lequel l'élément de réseau comprend un serveur d'applications de système multimédia Internet ou un avis de fonction payante ou une passerelle de sous-système multimédia Internet.

9. Élément de réseau selon la revendication 7 ou 8, dans lequel le second élément de réseau comprend une fonction de contrôle de session d'appel.

10. Procédé comprenant :
la détection, au niveau d'un premier élément de réseau (fonction AoC, IMS-GW), d'un type d'un avis de service payant demandé par un équipement d'utilisateur ;
l'envoi, par le premier élément de réseau à un système de facturation (OCS), d'un message de demande de contrôle de crédit indiquant le type détecté de l'avis demandé de service payant ;
la réception, au niveau du premier élément de réseau en provenance du système de facturation, d'un message de contrôle de crédit incluant une information relative au type détecté de l'avis demandé de service payant ;
la réception, par le premier élément de réseau en provenance d'un second élément de réseau (S-CSCF, 61), d'un message d'invitation sur protocole d'ouverture de session contenant, dans un en-tête du message d'invitation sur protocole d'ouverture de session, le type détecté de l'avis demandé de service payant ;
la détection, au niveau du premier élément de réseau, du type d'un avis de service payant demandé par l'équipement d'utilisateur, à partir du message d'invitation sur protocole d'ouverture de session reçu en provenance du second élément de réseau ; et
le transfert, par le premier élément de réseau au second élément de réseau, de l'information relative au type détecté de l'avis demandé de service payant, reçue en provenance du système de facturation.

11. Procédé selon la revendication 10, dans lequel le message de demande comprend une paire de valeurs d'attribut indiquant le type détecté de l'avis demandé de service payant.

12. Procédé selon la revendication 10 ou 11, comprenant en outre la réception, par le second élément de réseau en provenance du premier élément de réseau, de l'information relative à l'avis détecté de service payant.

13. Procédé selon l'une quelconque des revendications 10 à 12, comprenant en outre le transfert, par le second élément de réseau à l'équipement d'utilisateur, de l'information relative à l'avis détecté de service payant.

14. Procédé selon l'une quelconque des revendications 10 à 13, dans lequel le premier élément de réseau comprend un serveur d'applications de système multimédia Internet ou un avis de fonction payante ou une passerelle de sous-système multimédia Internet.

15. Procédé selon l'une quelconque des revendications 11 à 14, dans lequel le second élément de réseau comprend une fonction de contrôle de session d'appel.

16. Produit de programme informatique comportant un programme pour dispositif de traitement, comprenant des parties de code logiciel pour exécuter les étapes d'un procédé selon l'une quelconque des revendications 10 à 15 quand le programme est exécuté sur le dispositif de traitement.
